(19) Europäisches Patentamt / European Patent Office / Office européen des brevets

(11) **EP 4 714 563 A1**

(12) **EUROPEAN PATENT APPLICATION**
published in accordance with Art. 153(4) EPC

(43) Date of publication:
**25.03.2026 Bulletin 2026/13**

(21) Application number: **24807230.8**

(22) Date of filing: **15.05.2024**

(51) International Patent Classification (IPC):
***B05C 9/10*** *(2006.01)* ***B05C 13/02*** *(2006.01)*
***G01B 11/24*** *(2006.01)*

(52) Cooperative Patent Classification (CPC):
**B05C 9/10; B05C 13/02; G01B 11/24**

(86) International application number:
**PCT/JP2024/017959**

(87) International publication number:
**WO 2024/237279 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.05.2023 JP 2023080770**

(71) Applicant: **NHK Spring Co., Ltd.**
**Yokohama-shi, Kanagawa 236-0004 (JP)**

(72) Inventors:
- **KAMIYA, Takafumi**
  **Yokohama-shi, Kanagawa 236-0004 (JP)**
- **SHIRAO, Masato**
  **Yokohama-shi, Kanagawa 236-0004 (JP)**

(74) Representative: **Hoffmann Eitle**
**Patent- und Rechtsanwälte PartmbB**
**Arabellastraße 30**
**81925 München (DE)**

(54) **STRAND DETECTION SYSTEM, CONTROL DEVICE, CONTROL METHOD, AND CONTROL PROGRAM**

(57) A wire detection system 1 includes a support mechanism 4 configured to support a coil spring W and allows the coil spring W to rotate on a specific axis Ax following a central axis of the coil spring W, a sensor 5 configured to measure a contour position of a wire of the coil spring W and output wire data, and a control device 3 configured to control operations of the support mechanism 4 and the sensor 5. The control device 3 includes a support mechanism control unit configured to operate the support mechanism 4 to rotate the coil spring W on the specific axis Ax, a sensor control unit configured to operate the sensor 5 to acquire the wire data from the sensor 5, and a target wire detection unit configured to detect a contour position of a target wire among contour positions of wires of the coil spring W included in the wire data.

FIG.1

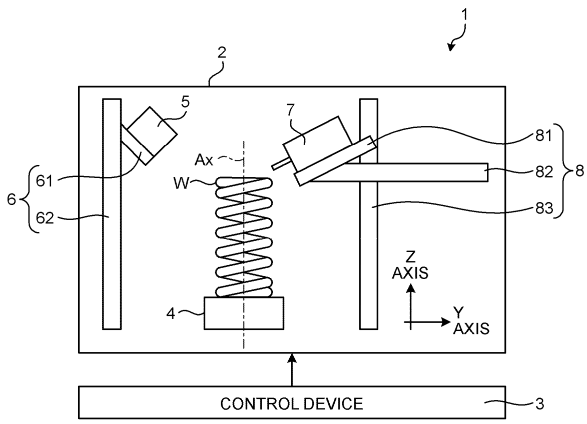


EP 4 714 563 A1

## Description

Field

The present invention relates to a wire detection system, a control device, a control method, and a control program.

Background

In the past, the following shape measuring method has been known as a method of measuring a shape of a coil spring (for example, see Patent Literature 1).

In the shape measuring method described in Patent Literature 1, a surface of a coil spring is irradiated with linear slit light expanded in an axial direction of the coil spring fixed to a rotation stage, and the reflected light is captured by a camera to acquire wire data. In the shape measuring method, the wire data and a rotation angle when the coil spring is rotated on the axis are stored in association with each other, and the shape of the coil spring is measured by performing image processing on the wire data.

Citation List

Patent Literature

Patent Literature 1: JP 2010-101693 A

Summary

Technical Problem

In the shape measuring method described in Patent Literature 1, a plurality of adjacent wires of the coil spring may be included in the captured wire data depending on the position where a light source that emits the slit light or a camera is arranged. In such a case, it is difficult to determine a target wire among the plurality of wires, and as a result, the shape of the coil spring cannot be accurately measured.

Due to the above-described reasons, there is a demand for a technique capable of detecting a target wire from wire data.

The present invention has been made in view of the above problems, and an object thereof is to provide a wire detection system capable of appropriately detecting a target wire from wire data, a control device, a control method, and a control program.

Solution to Problem

To solve the above-described problem and achieve the object, a wire detection system according to the present invention includes: a support mechanism configured to support a coil spring and allow the coil spring to rotate on a specific axis following a central axis of the coil spring; a sensor configured to measure a contour position of a wire of the coil spring and output wire data; and a control device configured to control operations of the support mechanism and the sensor, wherein the control device includes a support mechanism control unit configured to operate the support mechanism to rotate the coil spring on the specific axis, a sensor control unit configured to operate the sensor to acquire the wire data from the sensor, and a target wire detection unit configured to detect a contour position of a target wire among contour positions of wires of the coil spring included in the wire data.

Moreover, in the above-described wire detection system according to the present invention, the wire data includes a contour-corresponding point corresponding to the contour position of the wire of the coil spring measured by the sensor on sensor coordinate axes including a first axis from the sensor toward the measurement target and a second axis orthogonal to the first axis, and the target wire detection unit is configured to execute, by referring to the wire data, search processing to move a virtual line parallel to the first axis from a specific search start position on the second axis along the second axis to thus extract the contour-corresponding point positioned on the virtual line, and detect a plurality of the contour-corresponding points extracted continuously by the search processing as the contour position of the target wire.

Moreover, in the above-described wire detection system according to the present invention, the target wire detection unit is configured to detect, as the contour position of the target wire, a plurality of the contour-corresponding points including the contour-corresponding point extracted when the virtual line is moved by the smallest movement amount from the search start position, among the contour-corresponding point extracted when the virtual line is moved in the first direction along the second axis from the search start position and the contour-corresponding point extracted when the virtual line is moved in the second direction opposite to the first direction along the second axis from the search start position.

Moreover, in the above-described wire detection system according to the present invention, the target wire detection unit is configured to repeatedly execute detection of the contour position of the target wire by the search processing with a specific control cycle, and set a center position in the second axis direction at the contour position of the target wire as the search start position in the search processing in a next control cycle after detection of the contour position of the target wire.

Moreover, in the above-described wire detection system according to the present invention, the target wire detection unit is configured to extract, through the search processing, only the contour-corresponding point in which a distance in the first axis direction between the contour-corresponding points adjacent to each other in the second axis direction is equal to or less than a specific first threshold.

Moreover, in the above-described wire detection system according to the present invention, in a case where number of the plurality of contour-corresponding points is equal to or less than a specific second threshold, the target wire detection unit is configured to repeat the search processing to detect the contour position of the target wire again.

Moreover, the above-described wire detection system according to the present invention further includes: an application device configured to apply a coating material to the coil spring, wherein the control device includes an application position calculation unit configured to calculate an application position of the coating material on the target wire based on the contour position of the target wire, a movement control unit configured to move the application device and the support mechanism relative to each other to position the application device at a position where the coating material is applied from the application device to the application position, and an application device control unit configured to operate the application device to apply the coating material from the application device to the application position.

Moreover, the above-described wire detection system according to the present invention further includes: a moving device configured to support the application device and move the application device, wherein the movement control unit is configured to operate the moving device to position the application device at a position where the coating material is applied from the application device to the application position.

Moreover, in the above-described wire detection system according to the present invention, the sensor is configured to measure a contour position of a wire of the coil spring from directions intersecting the specific axis and a plane orthogonal to the specific axis, respectively.

Moreover, a control device according to the present invention includes: a support mechanism control unit configured to operate a support mechanism that supports a coil spring to rotate the coil spring on a specific axis following a central axis of the coil spring; a sensor control unit configured to operate a sensor that measures a contour position of a wire of the coil spring and outputs wire data, to acquire the wire data; and a target wire detection unit configured to detect a contour position of a target wire among contour positions of wires of the coil spring included in the wire data.

Moreover, a control method executed by a control device of a wire detection system according to the present invention includes: a support mechanism control step of operating a support mechanism configured to support a coil spring to rotate the coil spring on a specific axis following a central axis of the coil spring; a sensor control step of operating a sensor configured to measure a contour position of a wire of the coil spring and output wire data, to acquire the wire data; and a target wire detection step of detecting a contour position of a target wire among contour positions of wires of the coil spring included in the wire data.

Moreover, a control program according to the present invention causes a computer to execute: a support mechanism control step of operating a support mechanism configured to support a coil spring to rotate the coil spring on a specific axis following a central axis of the coil spring; a sensor control step of operating a sensor configured to measure a contour position of a wire of the coil spring and output wire data, to acquire the wire data; and a target wire detection step of detecting a contour position of a target wire among contour positions of wires of the coil spring included in the wire data.

## Advantageous Effects of Invention

According to the wire detection system, control device, control method, and control program according to the present invention, it is possible to appropriately detect a target wire from wire data.

## Brief Description of Drawings

FIG. 1 is a diagram illustrating a configuration of a coating material application system according to an embodiment.
FIG. 2 is a diagram describing a positional relationship between a sensor and a dispenser.
FIG. 3 is a block diagram illustrating a configuration of a control device.

FIG. 4 is a flowchart illustrating a control method executed by the control device.
FIG. 5 is a flowchart illustrating a target wire detection step (Step S4).
FIG. 6 is a diagram describing the target wire detection step (Step S4).
FIG. 7 is a diagram describing Step S5.
FIG. 8 is a diagram describing Step S4A in a next control cycle.
FIG. 9 is a diagram describing a first modification of the embodiment.
FIG. 10 is a diagram describing a second modification of the embodiment.

## Description of Embodiments

Hereinafter, modes for carrying out the present invention (hereinafter, referred to as the embodiments) will be described with reference to the drawings. Note that the present invention is not limited by the embodiments to be described below. Furthermore, in the description of the drawings, the same portions are denoted by the same reference numerals.
Hereinafter, a case where a wire detection system according to the present invention is applied to a coating material application system that applies a coating material to a coil spring will be described as an example.

### [Schematic Configuration of Coating Material Application System]

FIG. 1 is a diagram illustrating a configuration of a coating material application system 1 according to an embodiment.
As illustrated in FIG. 1, the coating material application system 1 includes a coating material application device 2 and a control device 3. In the coating material application system 1, the coating material application device 2 is operated under the control of the control device 3, so that a coating material such as a thermosetting resin or a thermoplastic resin is applied to a specific position (application position) on a coil spring W. Here, the application position is a portion where wires of the coil spring W are brought into contact with each other when the coil spring W is compressed. That is, by applying the coating material to the application position, the contact damage between the wires in the coil spring W at the application position is reduced.
In the present embodiment, the wire of the coil spring W has a "rectangular" cross-sectional shape (see FIGS. 6 and 7).

### [Configuration of Coating Material Application Device]

First, a configuration of the coating material application device 2 will be described.
In the description of the configuration of the coating material application device 2, an axis along the vertical direction (vertical direction in FIG. 1) is defined as a Z axis (FIG. 1), and one of two axes orthogonal to the Z axis (axis along the horizontal direction in FIG. 1) is defined as a Y axis (FIG. 1).
As illustrated in FIG. 1, the coating material application device 2 includes a support base 4, a sensor 5, a first moving device 6, a dispenser 7, and a second moving device 8.
The support base 4 corresponds to a support mechanism according to the present invention. As illustrated in FIG. 1, the support base 4 supports the coil spring W. Specifically, the coil spring W is placed on the support base 4 with a central axis of the coil spring W following the Z axis. The support base 4 includes a servomotor or the like, and is configured to be rotatable on a specific axis Ax (FIG. 1) following the central axis of the coil spring W under the control of the control device 3. In the present embodiment, the specific axis Ax is an axis parallel to the Z axis.
The sensor 5 measures a contour position of a wire of the coil spring W under the control of the control device 3. In the present embodiment, the sensor 5 is formed of a laser sensor. More specifically, the sensor 5 emits laser light linearly along a Y-Z plane from a direction inclined at 45° with respect to the Y axis and the Z axis. The sensor 5 is configured to receive the laser light reflected from the wire of the coil spring W by an image capturing element such as a complementary metal oxide semiconductor (CMOS) and measure a profile of a site of the wire where the linear laser light is reflected. In addition, the sensor 5 outputs the wire data obtained by measuring the contour position of the wire of the coil spring W to the control device 3. The inclination angle of the sensor 5 with respect to the Y axis and the Z axis is not limited to 45°, and other inclination angles may be set.
The first moving device 6 supports and moves the sensor 5. As illustrated in FIG. 1, the first moving device 6 includes a slider 61 that supports the sensor 5, a guide rail 62 extending along the Z axis, a servomotor (not illustrated), and the like. In the first moving device 6, the slider 61 moves on the guide rail 62 along the Z axis under the control of the control device 3. That is, in the present embodiment, the first moving device 6 moves the sensor 5 only along the specific axis Ax.
The dispenser 7 corresponds to an application device according to the present invention, and applies a coating material to the coil spring W under the control of the control device 3. The application device according to the present invention is not limited to the dispenser 7, and other application devices may be adopted.

The second moving device 8 corresponds to a moving device according to the present invention, and supports and moves the dispenser 7. As illustrated in FIG. 1, the second moving device 8 includes a slider 81 that supports the dispenser 7, a guide rail 82 extending along the Y axis, a guide rail 83 extending along the Z axis, a servomotor (not illustrated), and the like. In the second moving device 8, under the control of the control device 3, the slider 81 moves on the guide rail 82 along the Y axis, and the guide rail 82 moves on the guide rail 83 along the Z axis. That is, in the present embodiment, the second moving device 8 moves the dispenser 7 only along the specific axis Ax and the Y axis.

[Positional Relationship Between Sensor and Dispenser]

Next, a positional relationship between the sensor 5 and the dispenser 7 described above will be described.

FIG. 2 is a diagram describing a positional relationship between the sensor 5 and the dispenser 7. Specifically, FIG. 2 is a diagram in which the sensor 5 and the dispenser 7 are viewed from above along the Z axis.

As illustrated in FIG. 2, a measurement position PM of the contour position of the wire of the coil spring W by the sensor 5 and an application position PA of the coating material on the coil spring W by the dispenser 7 are shifted by a specific angle around the specific axis Ax.

Here, in the present embodiment, the sensor 5 emits linear laser light as described above, and measures a profile of a site of the wire of the coil spring W that has reflected the linear laser light. Therefore, the measurement position PM corresponds to a position of the site. In addition, in the present embodiment, the specific angle is 180°. The specific angle is not limited to 180°, and other angles may be set.

[Configuration of Control Device]

Next, a configuration of the control device 3 will be described.

FIG. 3 is a block diagram illustrating a configuration of the control device 3.

The control device 3 controls an overall operation of the coating material application device 2. As illustrated in FIG. 3, the control device 3 includes an input unit 31, a storage unit 32, and a control unit 33.

The input unit 31 is formed of a button, a switch, a touch panel, or the like receiving a user operation, and outputs a signal corresponding to the user operation to the control unit 33.

The storage unit 32 stores, in addition to various programs (including a control program according to the present invention) that are executed by the control unit 33, data and the like necessary for the control unit 33 to perform processing.

The control unit 33 is realized by executing the various programs stored in the storage unit 32 by a controller such as a central processing unit (CPU) or a micro processing unit (MPU), and controls an overall operation of the coating material application system 1. The control unit 33 is not limited to the CPU or MPU, and may be configured by an integrated circuit such as an application specific integrated circuit (ASIC) or a field-programmable gate array (FPGA). As illustrated in FIG. 3, the control unit 33 includes a support base control unit 331, a sensor control unit 332, a first movement control unit 333, a target wire detection unit 334, an application position calculation unit 335, a second movement control unit 336, and an application device control unit 337. Here, the support base control unit 331 corresponds to a support mechanism control unit according to the present invention. In addition, the second movement control unit 336 corresponds to a movement control unit according to the present invention.

Detailed functions of the support base control unit 331, the sensor control unit 332, the first movement control unit 333, the target wire detection unit 334, the application position calculation unit 335, the second movement control unit 336, and the application device control unit 337 will be described in "Control Method Executed by Control Device" to be described later.

[Control Method Executed by Control Device]

Next, a control method executed by the control device 3 will be described.

FIG. 4 is a flowchart illustrating a control method executed by the control device 3.

An operator installs the coil spring W that is an application target on the support base 4. Then, the operator performs an application start operation on the input unit 31. Therefore, the control device 3 executes the following control method.

First, the support base control unit 331 rotates the support base 4 on the specific axis Ax at a specific rotation speed (Step S1: support mechanism control step).

Here, the storage unit 32 stores data indicating the specific rotation speed. In Step S1, the support base control unit 331 reads the data from the storage unit 32, and rotates the support base 4 at a rotation speed based on the data. Regarding the data, the value of the rotation speed can be changed by a user operation on the input unit 31.

After Step S1, the sensor control unit 332 operates the sensor 5 to measure a contour position of a wire of the coil spring W by the sensor 5. The sensor control unit 332 acquires wire data from the sensor 5 (Step S2: sensor control step).

Here, as described above, the sensor 5 is configured to be able to measure the profile of the wire of the coil spring W. The sensor 5 outputs, as wire data, position coordinates of a site (a contour-corresponding point corresponding to the contour position of the wire of the coil spring W) of the wire of the coil spring W that has reflected the linear laser light output from the sensor 5.

After Step S2, the first movement control unit 333 operates the first moving device 6 to move the sensor 5 along the Z axis at a specific movement speed (Step S3). For example, the sensor 5 is positioned at a position where a position of one end on the upper side of the wire of the coil spring W installed on the support base 4 can be measured, and is moved downward at the specific speed by executing Step S3. In the present embodiment, the sensor 5 is moved from the upper side toward the lower side and the coating material is applied from one end on the upper side to the other end on the lower side of the wire of the coil spring W. In contrast, the sensor 5 may be moved from the lower side toward the upper side and the coating material is applied from the other end on the lower side to the one end on the upper side of the wire of the coil spring W.

Here, the storage unit 32 stores data indicating a distance by which the sensor 5 is moved along the Z axis every time the support base 4 is rotated by, for example, 180°. In Step S3, the first movement control unit 333 reads the data from the storage unit 32, and moves the sensor 5 at a movement speed based on the data. Regarding the data, the value of the movement distance can be changed by a user operation on the input unit 31.

After Step S3, the target wire detection unit 334 detects a contour position of a target wire among the contour positions of the wires of the coil spring W included in the wire data acquired in Step S2 (Step S4: target wire detection step).

FIG. 5 is a flowchart illustrating the target wire detection step (Step S4). FIG. 6 is a diagram describing the target wire detection step (Step S4). Specifically, each of (a) and (b) of FIG. 6 illustrates the wire data. In addition, in (a) and (b) of FIG. 6, contour-corresponding points corresponding to contour positions of adjacent wires W1 to W3 (at different positions in the specific axis Ax direction) of the coil spring W in the wire data are indicated by solid lines L1 to L3, respectively. Here, the solid line L2 indicates each contour-corresponding point corresponding to the contour position of the target wire W2. In (a) and (b) of FIG. 6, the vertical axis is a first axis constituting the coordinate axes (hereinafter, referred to as the sensor coordinate axes) measured by the sensor 5. In addition, the horizontal axis is a second axis constituting the sensor coordinate axes. Hereinafter, the coordinate axes of the Y axis and the Z axis are referred to as the device coordinate axes in order to be distinguished from the sensor coordinate axes. In the present embodiment, as described above, the sensor 5 is installed to linearly emit laser light along the Y-Z plane from the direction inclined by 45° with respect to the Y axis and the Z axis. Therefore, the first axis (Z' axis) from the sensor 5 toward the measurement target (corresponding to the direction of the laser light output from the sensor 5) and the second axis (Y' axis) orthogonal to the first axis rotate by 45° with respect to the Z axis and the Y axis, respectively (see FIG. 7). In addition, (a) of FIG. 6 is a diagram illustrating a case where there is no contour-corresponding point on a virtual line VL passing through a search start position PS. (b) of FIG. 6 is a diagram illustrating a case where there is a contour-corresponding point on the virtual line VL passing through the search start position PS.

In Step S4, first, the target wire detection unit 334 sets a specific search start position PS (FIG. 6) on the second axis Y' in the wire data acquired in Step S2 (Step S4A).

Here, the control device 3 repeatedly executes the loop of Steps S1 to S8. In a first loop of Steps S1 to S8, the target wire detection unit 334 sets, for example, a center position of a measurement range of the sensor 5 on the second axis Y' as the search start position PS in Step S4A. The search start position PS is not limited to the center position of the measurement range of the sensor 5 on the second axis Y', and may be another position on the second axis Y'. In addition, in second and subsequent loops (next control cycle), the target wire detection unit 334 sets a specific position as the search start position PS in Step S4A.

Step S4A in a next control cycle will be described later in "Step S4A in Next Control Cycle".

After Step S4A, the target wire detection unit 334 starts, by referring to the wire data acquired in Step S2, search processing to sequentially move the virtual line VL parallel to the first axis (Z' axis) from the search start position PS by a predetermined distance (hereinafter, referred to as the virtual line movement pitch) along the second axis (Y' axis) to thus extract a contour-corresponding point positioned within a predetermined range (hereinafter, referred to as the extraction range RE (FIG. 6)) on the virtual line VL (Step S4B). Here, the virtual line movement pitch is a value determined by the resolution of measurement in the sensor 5. In addition, the extraction range RE is a range determined by the installation positions of the sensor 5 and the coil spring W, and is a range on the first axis (Z' axis) in which it is assumed that the wire of the coil spring W is present.

After Step S4B, the target wire detection unit 334 continues the search processing until the contour-corresponding point is extracted (Step S4C).

In a case where the contour-corresponding point is extracted (Step S4C: Yes), the target wire detection unit 334 sets the contour-corresponding point as a wire start point position, and stores position coordinates of the contour-corresponding point in the storage unit 32 (Step S4D).

Specifically, the target wire detection unit 334 sets the wire start point position as follows in Step S4D.

First, it is assumed that there is no contour-corresponding point within the extraction range RE on the virtual line VL passing through the search start position PS ((a) of FIG. 6).

In this case, in Step S4D, the target wire detection unit 334 sets, as the wire start point position, a contour-corresponding point PA' extracted when the virtual line VL is moved by the smallest movement amount from the search start position PS, among the contour-corresponding point PA' extracted when the virtual line VL is moved in a first direction Ar1 along the second axis (Y' axis) from the search start position PS and a contour-corresponding point PB' extracted when the virtual line VL is moved in a second direction Ar2 opposite to the first direction Ar1 along the second axis (Y' axis).

In addition, it is assumed that there is a contour-corresponding point PC' within the extraction range RE on the virtual line VL passing through the search start position PS ((b) of FIG. 6).

In this case, in Step S4D, the target wire detection unit 334 sets the contour-corresponding point PC' within the extraction range RE on the virtual line VL passing through the search start position PS as the wire start point position.

After Step S4D, the target wire detection unit 334 sets a search direction in which the virtual line VL is moved (Step S4E).

Specifically, in Step S4E, in a case where there is no contour-corresponding point within the extraction range RE on the virtual line VL passing through the search start position PS ((a) of FIG. 6), the target wire detection unit 334 sets the direction in which the virtual line VL is moved when finding the wire start point position from the search start position PS as the search direction. That is, in (a) of FIG. 6, the target wire detection unit 334 sets the first direction Ar1 as a search direction ArS.

On the other hand, in a case where there is the contour-corresponding point PC' within the extraction range RE on the virtual line VL passing through the search start position PS ((b) of FIG. 6), the target wire detection unit 334 sets both the first and second directions Ar1 and Ar2 from the contour-corresponding point PC' (wire start point position) as the search direction ArS in Step S4E.

After Step S4E, the target wire detection unit 334 sets the direction in which the virtual line VL is moved from the wire start point position as the search direction ArS set in Step S4E, and continues the search processing until the contour-corresponding point cannot be extracted when the virtual line VL is moved by the virtual line movement pitch (Step S4F).

In a case where the contour-corresponding point is extracted (Step S4F: No), the target wire detection unit 334 determines whether the extracted contour-corresponding point satisfies a continuity condition (Step S4G). Here, the continuity condition is that a distance in the first axis (Z' axis) direction between the above extracted contour-corresponding point and the contour-corresponding point extracted immediately previously is equal to or less than a specific first threshold (for example, 1 mm).

In a case where it is determined that the continuity condition is satisfied (Step S4G: Yes), the target wire detection unit 334 stores the position coordinates of the contour-corresponding point determined to satisfy the continuity condition in the storage unit 32, and returns to Step S4F.

On the other hand, in a case where it is determined that the continuity condition is not satisfied (Step S4G: No) or in a case where the contour-corresponding point cannot be extracted when the virtual line VL is moved by the virtual line movement pitch (Step S4F: Yes), the target wire detection unit 334 ends the search processing (Step S4H).

Through the above-described Steps S4A to S4H, the position coordinates of the contour-corresponding points corresponding to the contour position of the target wire are stored in the storage unit 32. In the example of FIG. 6, the storage unit 32 stores the position coordinates of the contour-corresponding points (including the contour-corresponding point PA') corresponding to the contour position of the target wire W2.

After Step S4, the application position calculation unit 335 calculates position coordinates P2 (y, z) of the application position of the coating material on the target wire, based on the position coordinates of the contour-corresponding points corresponding to the contour position of the target wire detected in Step S4 and stored in the storage unit 32 (Step S5).

FIG. 7 is a diagram describing Step S5. Specifically, FIG. 7 illustrates an emission region (Y-Z plane) of linear laser light emitted from the sensor 5. In FIG. 7, the laser light emission region is represented by dots. In addition, a Y' axis and a Z' axis illustrated in FIG. 7 are sensor coordinate axes. Furthermore, a Y axis and a Z axis illustrated in FIG. 7 are device coordinate axes.

Specifically, the application position calculation unit 335 extracts position coordinates P01' (y01', z01') and P02' (y02', z02') from the position coordinates of the contour-corresponding points corresponding to the contour position of the target wire detected in Step S4 and stored in the storage unit 32. The position coordinates P01' (y01', z01') and P02' (y02', z02') are position coordinates on the sensor coordinate axes, and are position coordinates of two edges having a high coordinate value in the Z axis direction on a site WR (represented by thick lines in FIG. 7) reflecting the linear laser light output from the sensor 5 in the target wire of the coil spring W. The application position calculation unit 335 calculates an intermediate point between the position coordinates P01' (y01', z01') and P02' (y02', z02') of the two edges as position coordinates P1' (y1', z1') of the application position on the site WR (FIG. 7).

Next, the application position calculation unit 335 converts the position coordinates P1' (y1', z1') on the sensor coordinate axes into position coordinates P1 (y1, z1) on the device coordinate axes through the following Expression (1). In Expression (1), $\theta$ represents an angle corresponding to the installation position of the sensor 5, and is 45° in the present

embodiment.

$$y1=y1' \cdot \cos\theta - z1' \cdot \sin\theta$$
$$z1=y1' \cdot \sin\theta + z1' \cdot \cos\theta \quad (1)$$

Finally, the application position calculation unit 335 calculates position coordinate P2 (y2, z2) provided by rotating the position coordinates P1 (y1, z1) by 180° around the specific axis Ax (Z axis), and calculates the position coordinates P2 (y2, z2) as an application position.

After Step S5, the second movement control unit 336 operates the second moving device 8 to move the dispenser 7 to a position where the coating material is applied from the dispenser 7 to the application position (position coordinates P2 (y2, z2)) (Step S6).

After Step S6, the application device control unit 337 operates the dispenser 7 at an application timing at which the support base 4 is rotated by 180° on the specific axis Ax from a measurement timing, to apply the coating material from the dispenser 7 to the application position (position coordinates P2 (y2, z2)) (Step S7). The measurement timing is a timing at which the sensor 5 measures the contour position of the wire of the coil spring W in Step S2.

After Step S7, the second movement control unit 336 operates the second moving device 8 to move the dispenser 7 along the Z axis at a specific movement speed (Step S8). The specific movement speed is the same as the specific movement speed of the sensor 5 in Step S3.

By repeatedly executing the above Steps S1 to S8, the coating material is applied from one end to the other end of the wire of the coil spring W.

[Step S4A in Next Control Cycle]

FIG. 8 is a diagram describing Step S4A in a next control cycle. Specifically, FIG. 8 is a diagram corresponding to FIG. 6. In addition, (a) of FIG. 8 is a diagram illustrating a time point at which Step S4 is completed in a predetermined control cycle. (b) of FIG. 8 is a diagram illustrating a time point at which Step S4 is started in a control cycle next to the control cycle in (a) of FIG. 8.

In Step S4A in a next control cycle after completion of Step S4 in a predetermined control cycle, the target wire detection unit 334 sets a center position CP in the second axis (Y' axis) direction at the contour position of the target wire detected in Step S4 in the predetermined control cycle as a search start position PS. In this way, the first detected target wire is continuously tracked.

According to the present embodiment described above, the following effects are obtained.

In the wire detection system according to the present embodiment, the control device 3 rotates the support base 4 on the specific axis Ax. In addition, the control device 3 operates the sensor 5 to acquire wire data from the sensor 5. Furthermore, the control device 3 detects a contour position of the target wire among the contour positions of the wires of the coil spring W included in the wire data. More specifically, the control device 3 executes, by referring to the wire data, search processing to move the virtual line VL from the search start position PS along the second axis (Y' axis) to thus extract the contour-corresponding point positioned on the virtual line VL, and detects a plurality of the contour-corresponding points extracted continuously by the search processing as the contour position of the target wire.

Therefore, even in a case where the wire data includes a plurality of adjacent wires of the coil spring W (wires W1 to W3 in the example of FIG. 6), it is possible to appropriately detect the contour position of the target wire (wire W2 in the example of FIG. 6).

For example, in the present embodiment, a wire data processing system is applied to the coating material application system 1 that applies a coating material to the coil spring W. The control device 3 calculates an application position of the coating material on the target wire, based on the position coordinates of the contour-corresponding points corresponding to the detected contour position of the target wire. In addition, the control device 3 moves the second moving device 8 to move the dispenser 7 to a position where the coating material is applied from the dispenser 7 to the application position, and operates the dispenser 7 to apply the coating material from the dispenser 7 to the application position.

Therefore, even in a case where the wire data includes a plurality of adjacent wires of the coil spring W (wires W1 to W3 in the example of FIG. 6), it is possible to apply the coating material to an appropriate application position on the target wire (wire W2 in the example of FIG. 6) with high accuracy.

In addition, in the present embodiment, the control device 3 detects, as the contour position of the target wire, a plurality of contour-corresponding points including the contour-corresponding point (contour-corresponding point PA' in the example of (a) of FIG. 6) extracted when the virtual line VL is moved by the smallest movement amount from the search start position PS, among the contour-corresponding point (contour-corresponding point PA' in the example of (a) of FIG. 6) extracted when the virtual line VL is moved in the first direction Ar1 along the second axis (Y' axis) from the search start position PS and the contour-corresponding point (contour-corresponding point PB' in the example of (a) of FIG. 6) extracted when the virtual line VL is moved in the second direction Ar2 along the second axis (Y' axis) from the search start position PS. In addition, in search processing in a next control cycle after detection of the contour position of the target wire, the control device 3 sets the center position CP in the second axis (Y' axis) direction at the contour position of the target wire as a search start position PS.

Therefore, the contour position of the first detected target wire can be rapidly detected in a subsequent control cycle, and the wire can be continuously tracked.

Meanwhile, as indicated by the dash-dot line L4 for the wire W1 in (a) of FIG. 6, the measurement may be performed in a state in which the adjacent wires W1 and W2 overlap each other in the wire data. In such a case, since a contour-corresponding point PD' corresponding to the contour position of the wire W2 and a contour-corresponding point PE' corresponding to the contour position of the wire W1 are separated by the virtual line movement pitch in the second axis (Y' axis) direction and are positioned within the extraction range RE, the whole of the wire W2 and the wire W1 indicated by the dash-dot line L4 are detected as the contour position of the target wire.

Regarding this, in the present embodiment, the control device 3 executes Step S4G to extract, through the search processing, only the contour-corresponding point in which a distance in the first axis (Z' axis) direction between the contour-corresponding points PD' and PE' (separated by the virtual line movement pitch in the second axis (Y' axis) direction) adjacent to each other in the second axis (Y' axis) direction is equal to or less than the specific first threshold.

Therefore, the contour-corresponding point PE' is not detected as the contour position of the target wire, and only the wire W2 can be detected as the contour position of the target wire.

In addition, in the present embodiment, the sensor 5 measures the contour position of the wire of the coil spring W from directions intersecting the specific axis Ax and a plane orthogonal to the specific axis Ax, respectively.

Therefore, the contour position on the upper surface side or the lower surface side of the wire of the coil spring W can be accurately measured.

In particular, in a case where the sensor 5 is arranged as above, the measurement is likely to be performed in a state in which the adjacent wires W1 and W2 overlap each other as described above. Therefore, by combining such arrangement of the sensor 5 with Step S4G, it is possible to accurately detect the contour position on the upper surface side or the lower surface side of the target wire while appropriately detecting the contour position of the target wire.

(Other Embodiments)

Although the modes for carrying out the present invention have been described so far, the present invention should not be limited to the above-described embodiments.

In the above-described embodiment, the wire detection system according to the present invention is applied to the coating material application system 1, but the present invention is not limited thereto.

For example, the wire detection system according to the present invention may be applied to a coil spring inspection system that detects a contour position of a target wire, and then calculates position coordinates of a specific point and dimensions of the specific point according to the contour position of the target wire to inspect the coil spring W.

In addition, for example, the wire detection system according to the present invention may be applied to a coil spring processing system that detects a contour position of a target wire, and then calculates position coordinates of a specific point according to the contour position of the target wire to perform processing on the position of the position coordinates on the coil spring W.

In the above-described embodiment, the first moving device 6 moves the sensor 5 only along one axis, e.g., the Z axis, but the present invention is not limited thereto. The first moving device 6 may be configured to be able to move the sensor 5 not only in the Z axis direction but also in the Y axis or X axis direction. Similarly, the second moving device 8 moves the dispenser 7 only along two axes, e.g., the Z axis and the Y axis, but the present invention is not limited thereto. The second moving device 8 may be configured to be able to move the dispenser 7 not only in the Z axis and Y axis directions but also in the X axis direction.

In the above-described embodiment, the first moving device 6 moves the sensor 5 along the Z axis with respect to the coil spring W, but the present invention is not limited thereto. The first moving device 6 may move the coil spring W (support base 4) along the Z axis with respect to the sensor 5. In addition, the first moving device 6 may not be provided in a case where the measurement range of the sensor 5 extends over the entire coil spring W.

In the above-described embodiment, the second movement control unit 336 operates the second moving device 8 to move the dispenser 7 to a position where the coating material is applied from the dispenser 7 to the application position (position coordinates P2 (y2, z2)), but the present invention is not limited thereto. The second movement control unit 336 may be able to move the dispenser 7 and the support base 4 relative to each other to position the dispenser 7 at a position where the coating material is applied from the dispenser 7 to the application position (position coordinates P2 (y2, z2)), and for example, the support base 4 may be moved with respect to the dispenser 7.

In the above-described embodiment, a laser sensor is adopted as the sensor 5, but the present invention is not limited thereto. The sensor 5 is not limited to the laser sensor, and a camera, a time of flight (TOF) sensor, or the like may be adopted as long as the contour position of the wire of the coil spring W can be measured.

In Step S4 according to the above-described embodiment, Step S4G may not be executed. That is, in a case where the contour-corresponding point is extracted (Step S4F: No), the target wire detection unit 334 stores the position coordinates of the contour-corresponding point in the storage unit 32, and returns to Step S4F. Similarly, Step S4G may not be executed in a first modification.

In the above-described embodiment, the support base 4 is adopted as the support mechanism according to the present invention, but the present invention is not limited thereto. Other configurations may be adopted as long as the coil spring W is supported and can be rotated on the specific axis Ax following the central axis of the coil spring W.

For example, as the support mechanism according to the present invention, a robot arm may be adopted, and a configuration may be adopted in which the coil spring W is rotated on the specific axis following the central axis of the coil spring W while the coil spring W is suspended by the robot arm.

In addition, for example, as the support mechanism according to the present invention, a configuration may be adopted in which the coil spring W is supported with the central axis of the coil spring W directed in the horizontal direction, and rotated on a specific axis following the central axis.

In the above-described embodiment, the following first modification may be adopted.

FIG. 9 is a diagram describing a first modification of the embodiment.

In a target wire detection step (Step S4) according to the present first modification, as illustrated in FIG. 9, Steps S4I and S4J are added to the target wire detection step (FIG. 5) described in the above-described embodiment. Hereinafter, Steps S4I and S4J will be mainly described.

Step S4I is executed in a case where it is determined that the continuity condition is not satisfied (Step S4G: No) or in a case where the contour-corresponding point cannot be extracted when the virtual line VL is moved by the virtual line movement pitch (Step S4F: Yes).

Specifically, in Step S4I, the target wire detection unit 334 determines whether each contour-corresponding point extracted in the search processing and stored in the storage unit 32 satisfies a non-noise condition. Here, the non-noise condition is that the number of the contour-corresponding points extracted in the search processing and stored in the storage unit 32 exceeds a specific second threshold.

In a case where it is determined that the non-noise condition is not satisfied (Step S4I: No), that is, in a case where the number of the contour-corresponding points extracted in the search processing and stored in the storage unit 32 is equal to or less than the specific second threshold, the target wire detection unit 334 determines that each contour-corresponding point is noise, changes the search start position PS (Step S4J), and returns to Step S4B. Then, the target wire detection unit 334 repeats the search processing to detect the contour position of the target wire again.

On the other hand, in a case where it is determined that the non-noise condition is satisfied (Step S4I: Yes), that is, in a case where the number of the contour-corresponding points extracted in the search processing and stored in the storage unit 32 exceeds the specific second threshold, the target wire detection unit 334 determines that each contour-corresponding point is not noise, and proceeds to Step S4H.

According to the present first modification described above, the following effects are obtained in addition to the same effects as those of the above-described embodiments.

In the present first modification, in a case where the number of the contour-corresponding points extracted in the search processing and stored in the storage unit 32 is equal to or less than the specific second threshold, the control device 3 repeats the search processing to detect the contour position of the target wire again.

This avoids extracting noise included in the wire data as the contour-corresponding point, and makes it possible to more appropriately detect the contour position of the target wire.

In the above-described embodiment, the following second modification may be adopted.

FIG. 10 is a diagram describing a second modification of the embodiment. Specifically, FIG. 10 is a diagram corresponding to FIG. 7.

In the second modification, the wire of the coil spring W has a "circular" cross-sectional shape.

In the present second modification, the application position calculation unit 335 executes Step S5 as described below.

Specifically, first, the application position calculation unit 335 extracts position coordinates P0' (y0', z0') and a radius R from the position coordinates of the contour-corresponding points corresponding to the contour position of the target wire detected in Step S4 and stored in the storage unit 32. The position coordinates P0' (y0', z0') are position coordinates on the sensor coordinate axes, and are position coordinates of a vertex on a site WA (represented by thick lines in FIG. 10) reflecting the linear laser light output from the sensor 5 in the wire of the coil spring W. The radius R is a radius of a virtual circle including the site WA. In addition, the application position calculation unit 335 calculates position coordinates P1' (y1', z1') of the application position on the site WA through the following Expression (2) based on the position coordinates P0' (y0', z0') and the radius R. The position coordinates P1' (y1', z1') are position coordinates on the sensor coordinate axes, and are position coordinates having the highest coordinate value in the Z axis direction on the virtual circle including the site WA (FIG. 10). In addition, in Expression (2), θ represents an angle corresponding to the installation position of the sensor 5, and is 45° in the present second modification.

$$y1' = y0' - R \cdot \sin\theta$$
$$z1' = z0' - (R - R \cdot \cos\theta) \qquad (2)$$

Next, as in the above-described embodiment, the application position calculation unit 335 calculates position coordinates P1 (y1, z1) and P2 (y2, z2) from the position coordinates P1' (y1', z1') calculated through Expression (2).

Reference Signs List

1 COATING MATERIAL APPLICATION SYSTEM

| | |
|---|---|
| 2 | COATING MATERIAL APPLICATION DEVICE |
| 3 | CONTROL DEVICE |
| 4 | SUPPORT BASE |
| 5 | SENSOR |
| 6 | FIRST MOVING DEVICE |
| 7 | DISPENSER |
| 8 | SECOND MOVING DEVICE |
| 31 | INPUT UNIT |
| 32 | STORAGE UNIT |
| 33 | CONTROL UNIT |
| 61 | SLIDER |
| 62 | GUIDE RAIL |
| 81 | SLIDER |
| 82, 83 | GUIDE RAIL |
| 331 | SUPPORT BASE CONTROL UNIT |

| | |
|---|---|
| 332 | SENSOR CONTROL UNIT |
| 333 | FIRST MOVEMENT CONTROL UNIT |
| 334 | TARGET WIRE DETECTION UNIT |
| 335 | APPLICATION POSITION CALCULATION UNIT |
| 336 | SECOND MOVEMENT CONTROL UNIT |
| 337 | APPLICATION DEVICE CONTROL UNIT |
| Ar1 | FIRST DIRECTION |
| Ar2 | SECOND DIRECTION |
| ArS | SEARCH DIRECTION |
| Ax | SPECIFIC AXIS |
| CP | CENTER POSITION |
| L1 to L3 | SOLID LINE |
| L4 | DASH-DOT LINE |
| PA | APPLICATION POSITION |
| PA' | to PE' CONTOUR-CORRESPONDING POINT |
| PM | MEASUREMENT POSITION |
| PS | SEARCH START POSITION |
| RE | EXTRACTION RANGE |
| VL | VIRTUAL LINE |
| W | COIL SPRING |
| W1 to W3 | WIRE |
| WA, WR | SITE |

**Claims**

**1.** A wire detection system comprising:

a support mechanism configured to

support a coil spring and
allow the coil spring to rotate on a specific axis following a central axis of the coil spring;

a sensor configured to

measure a contour position of a wire of the coil spring and
output wire data; and

a control device configured to control operations of the support mechanism and the sensor,
wherein the control device includes

a support mechanism control unit configured to operate the support mechanism to rotate the coil spring on the specific axis,
a sensor control unit configured to operate the sensor to acquire the wire data from the sensor, and
a target wire detection unit configured to detect a contour position of a target wire among contour positions of wires of the coil spring included in the wire data.

**2.** The wire detection system according to Claim 1,

wherein the wire data includes a contour-corresponding point corresponding to the contour position of the wire of the coil spring measured by the sensor on sensor coordinate axes including a first axis from the sensor toward the measurement target and a second axis orthogonal to the first axis, and
the target wire detection unit is configured to

execute, by referring to the wire data, search processing to move a virtual line parallel to the first axis from a specific search start position on the second axis along the second axis to thus extract the contour-corresponding point positioned on the virtual line, and
detect a plurality of the contour-corresponding points extracted continuously by the search processing as the contour position of the target wire.

**3.** The wire detection system according to Claim 2, wherein the target wire detection unit is configured to detect, as the contour position of the target wire, a plurality of the contour-corresponding points including the contour-corresponding point extracted when the virtual line is moved by the smallest movement amount from the search start position, among the contour-corresponding point extracted when the virtual line is moved in the first direction along the second axis from the search start position and the contour-corresponding point extracted when the virtual line is moved in the second direction opposite to the first direction along the second axis from the search start position.

**4.** The wire detection system according to Claim 3, wherein the target wire detection unit is configured to

repeatedly execute detection of the contour position of the target wire by the search processing with a specific control cycle, and
set a center position in the second axis direction at the contour position of the target wire as the search start position in the search processing in a next control cycle after detection of the contour position of the target wire.

**5.** The wire detection system according to Claim 2, wherein the target wire detection unit is configured to extract, through the search processing, only the contour-corresponding point in which a distance in the first axis direction between the contour-corresponding points adjacent to each other in the second axis direction is equal to or less than a specific first threshold.

**6.** The wire detection system according to Claim 2, wherein in a case where number of the plurality of contour-corresponding points is equal to or less than a specific second threshold, the target wire detection unit is configured to repeat the search processing to detect the contour position of the target wire again.

**7.** The wire detection system according to Claim 1, further comprising:

an application device configured to apply a coating material to the coil spring,

wherein the control device includes

an application position calculation unit configured to calculate an application position of the coating material on the target wire based on the contour position of the target wire,
a movement control unit configured to move the application device and the support mechanism relative to each other to position the application device at a position where the coating material is applied from the application device to the application position, and
an application device control unit configured to operate the application device to apply the coating material from the application device to the application position.

**8.** The wire detection system according to Claim 7, further comprising:

a moving device configured to support the application device and move the application device,
wherein the movement control unit is configured to operate the moving device to position the application device at a position where the coating material is applied from the application device to the application position.

**9.** The wire detection system according to Claim 1, wherein the sensor is configured to measure a contour position of a wire of the coil spring from directions intersecting the specific axis and a plane orthogonal to the specific axis, respectively.

**10.** A control device comprising:

a support mechanism control unit configured to operate a support mechanism that supports a coil spring to rotate the coil spring on a specific axis following a central axis of the coil spring;
a sensor control unit configured to operate a sensor that measures a contour position of a wire of the coil spring and outputs wire data, to acquire the wire data; and
a target wire detection unit configured to detect a contour position of a target wire among contour positions of wires of the coil spring included in the wire data.

**11.** A control method executed by a control device of a wire detection system, the method comprising:

a support mechanism control step of operating a support mechanism configured to support a coil spring to rotate the coil spring on a specific axis following a central axis of the coil spring;
a sensor control step of operating a sensor configured to measure a contour position of a wire of the coil spring and output wire data, to acquire the wire data; and
a target wire detection step of detecting a contour position of a target wire among contour positions of wires of the coil spring included in the wire data.

**12.** A control program for causing a computer to execute:

a support mechanism control step of operating a support mechanism configured to support a coil spring to rotate the coil spring on a specific axis following a central axis of the coil spring;
a sensor control step of operating a sensor configured to measure a contour position of a wire of the coil spring and output wire data, to acquire the wire data; and
a target wire detection step of detecting a contour position of a target wire among contour positions of wires of the coil spring included in the wire data.

FIG.1

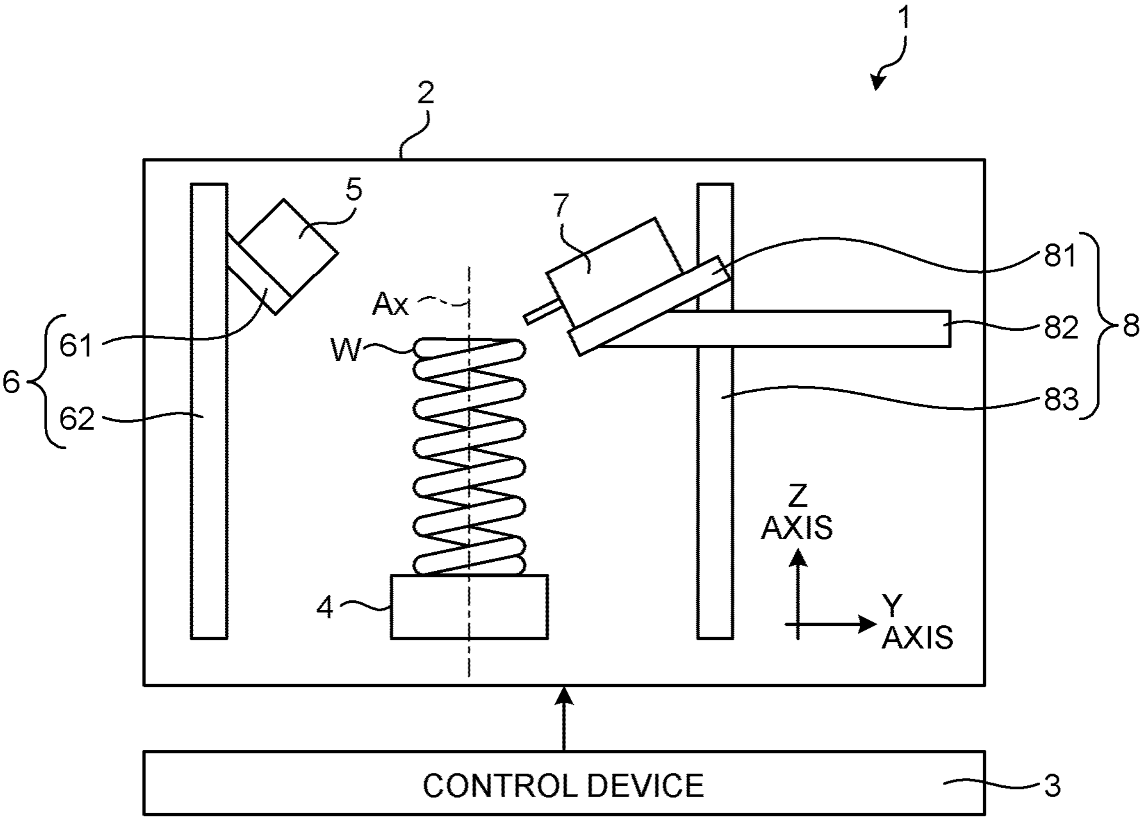
1
2
5
7
81
82
83
8
Ax
W
61
62
6
Z
AXIS
Y
AXIS
4
CONTROL DEVICE
3

FIG.2

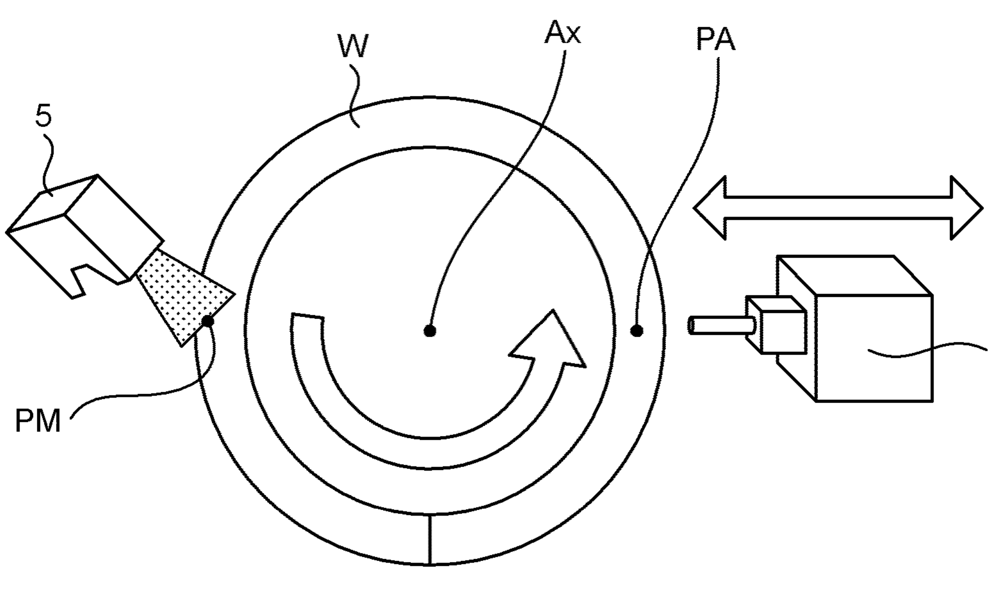
W
Ax
PA
5
PM
7

FIG.3

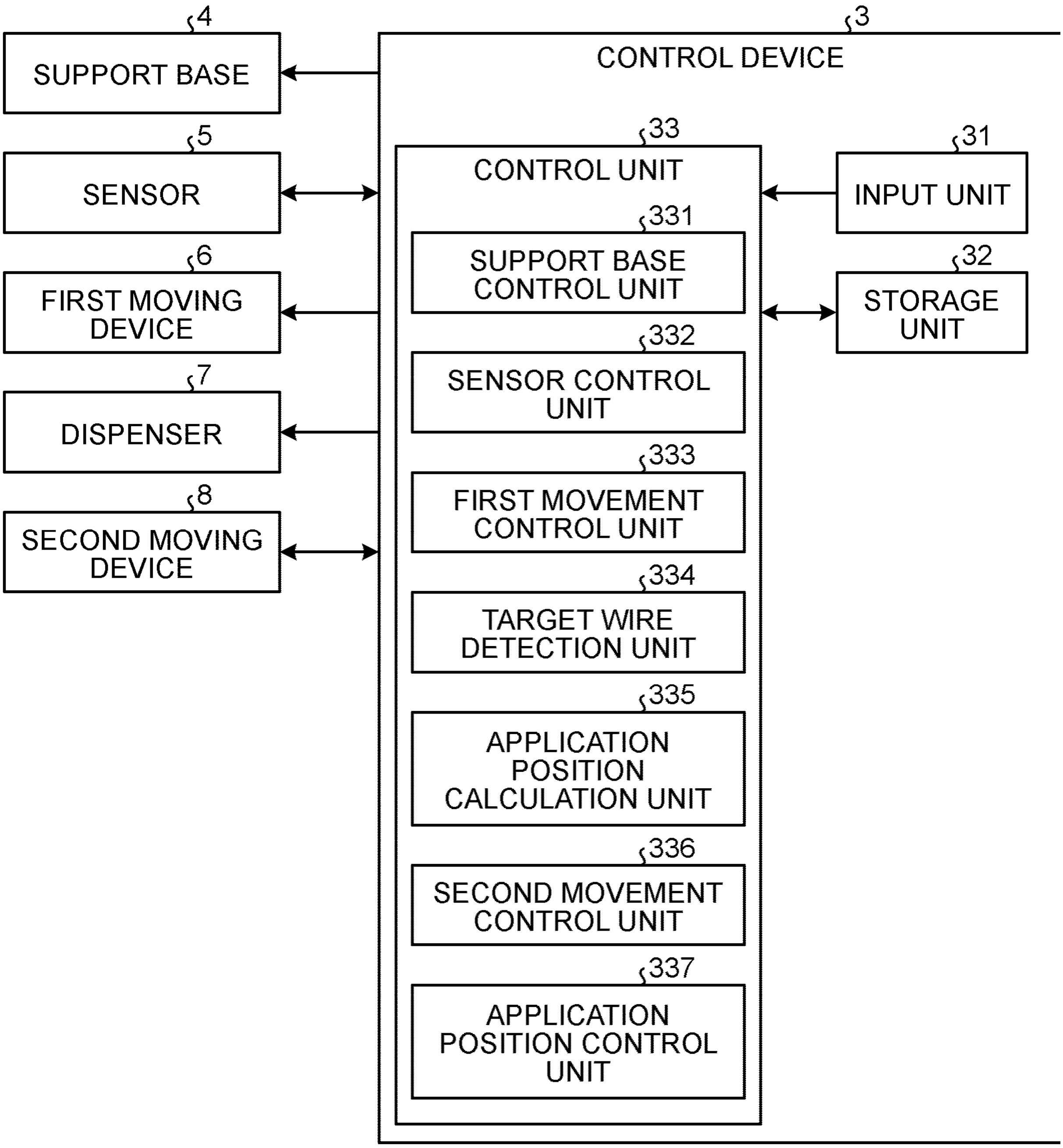
4
SUPPORT BASE
5
SENSOR
6
FIRST MOVING DEVICE
7
DISPENSER
8
SECOND MOVING DEVICE
3
CONTROL DEVICE
33
CONTROL UNIT
331
SUPPORT BASE CONTROL UNIT
332
SENSOR CONTROL UNIT
333
FIRST MOVEMENT CONTROL UNIT
334
TARGET WIRE DETECTION UNIT
335
APPLICATION POSITION CALCULATION UNIT
336
SECOND MOVEMENT CONTROL UNIT
337
APPLICATION POSITION CONTROL UNIT
31
INPUT UNIT
32
STORAGE UNIT

FIG.4

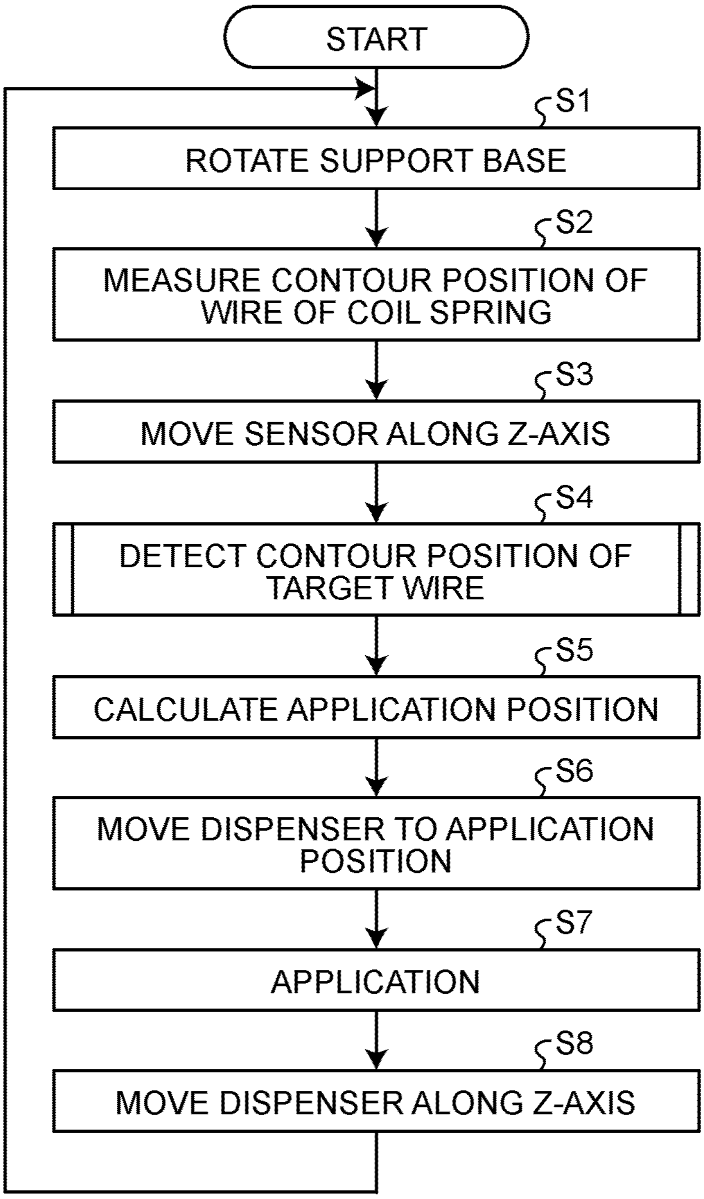
START
S1
ROTATE SUPPORT BASE
S2
MEASURE CONTOUR POSITION OF WIRE OF COIL SPRING
S3
MOVE SENSOR ALONG Z-AXIS
S4
DETECT CONTOUR POSITION OF TARGET WIRE
S5
CALCULATE APPLICATION POSITION
S6
MOVE DISPENSER TO APPLICATION POSITION
S7
APPLICATION
S8
MOVE DISPENSER ALONG Z-AXIS

FIG.5

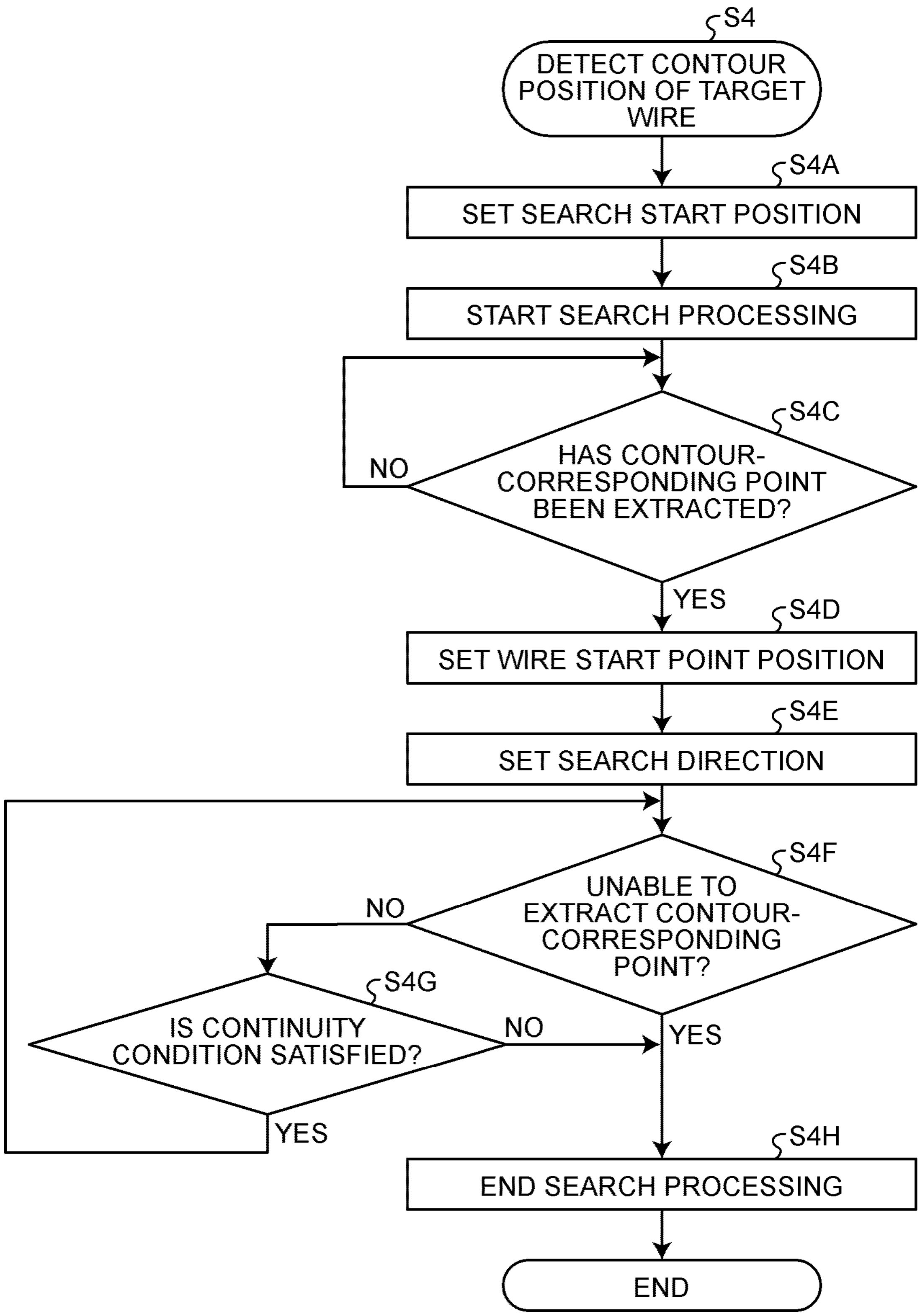
S4
DETECT CONTOUR POSITION OF TARGET WIRE
S4A
SET SEARCH START POSITION
S4B
START SEARCH PROCESSING
S4C
HAS CONTOUR-CORRESPONDING POINT BEEN EXTRACTED?
NO
YES
S4D
SET WIRE START POINT POSITION
S4E
SET SEARCH DIRECTION
S4F
UNABLE TO EXTRACT CONTOUR-CORRESPONDING POINT?
NO
S4G
IS CONTINUITY CONDITION SATISFIED?
NO
YES
YES
S4H
END SEARCH PROCESSING
END

FIG.6

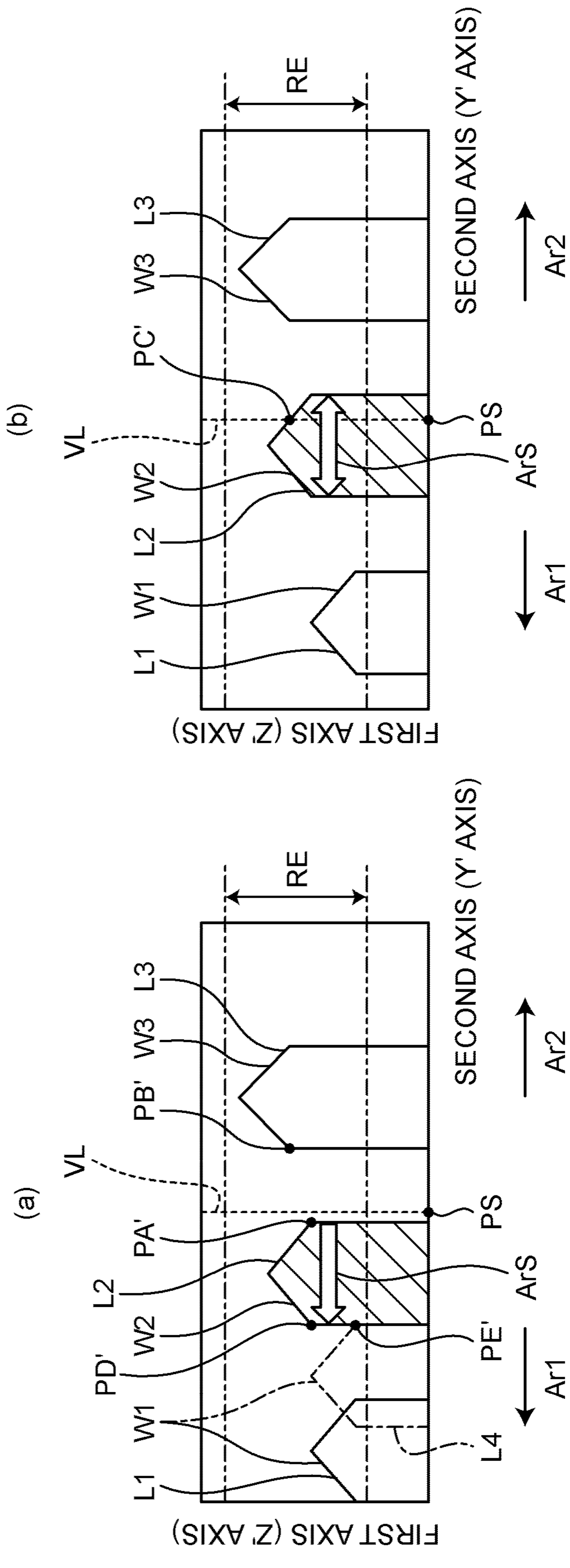
(a)
(b)
VL
RE
L1
W1
PD'
W2
L2
PA'
PB'
W3
L3
PC'
PS
ArS
PE'
L4
Ar1
Ar2
FIRST AXIS (Z' AXIS)
SECOND AXIS (Y' AXIS)

FIG.7

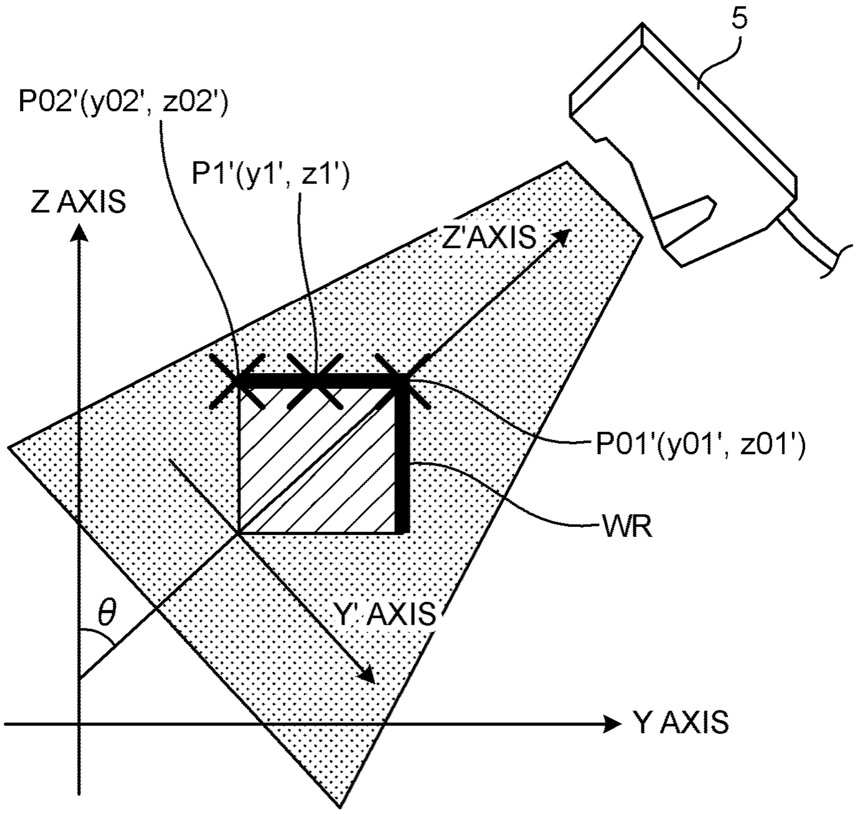
5
P02'(y02', z02')
P1'(y1', z1')
Z AXIS
Z'AXIS
P01'(y01', z01')
WR
θ
Y' AXIS
Y AXIS

FIG.8

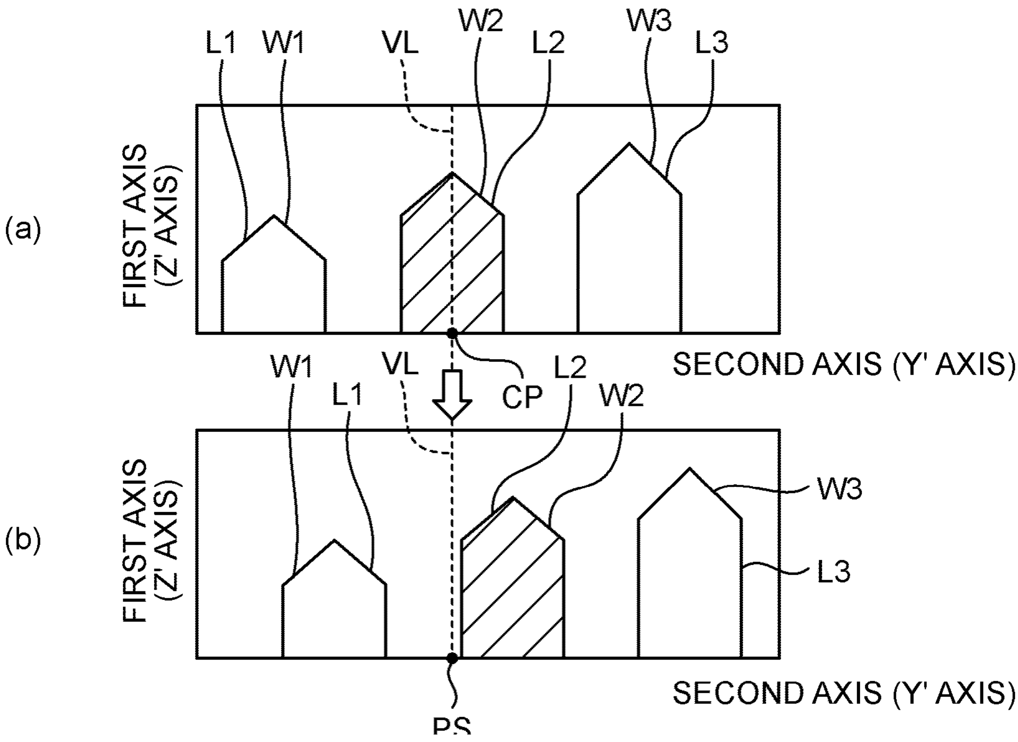
L1
W1
VL
W2
L2
W3
L3
(a)
FIRST AXIS (Z' AXIS)
CP
SECOND AXIS (Y' AXIS)
W1
L1
VL
L2
W2
W3
(b)
FIRST AXIS (Z' AXIS)
L3
SECOND AXIS (Y' AXIS)
PS

FIG.9

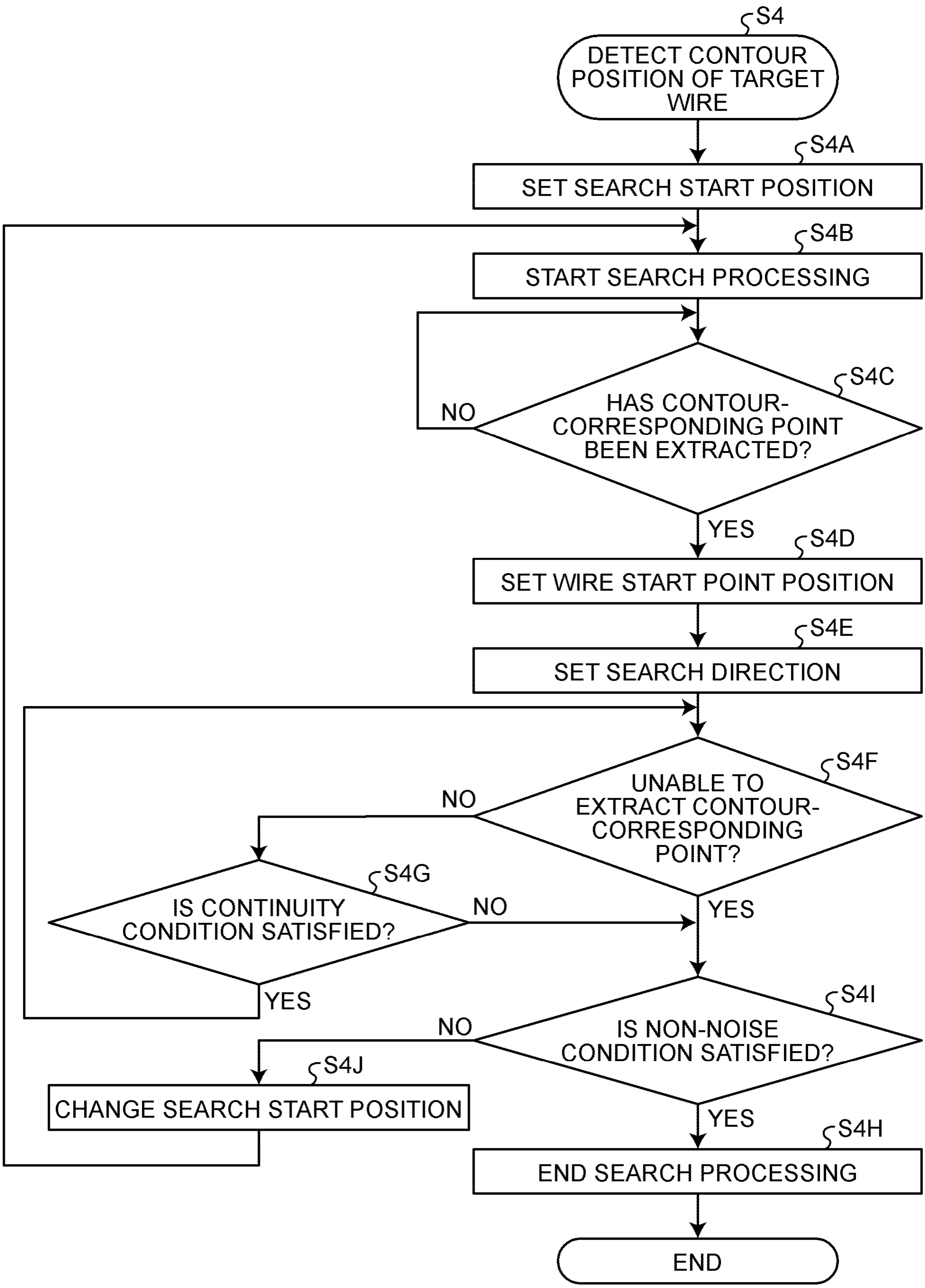
S4
DETECT CONTOUR POSITION OF TARGET WIRE
S4A
SET SEARCH START POSITION
S4B
START SEARCH PROCESSING
S4C
HAS CONTOUR-CORRESPONDING POINT BEEN EXTRACTED?
NO
YES
S4D
SET WIRE START POINT POSITION
S4E
SET SEARCH DIRECTION
S4F
UNABLE TO EXTRACT CONTOUR-CORRESPONDING POINT?
NO
YES
S4G
IS CONTINUITY CONDITION SATISFIED?
NO
YES
S4I
IS NON-NOISE CONDITION SATISFIED?
NO
YES
S4J
CHANGE SEARCH START POSITION
S4H
END SEARCH PROCESSING
END

FIG.10

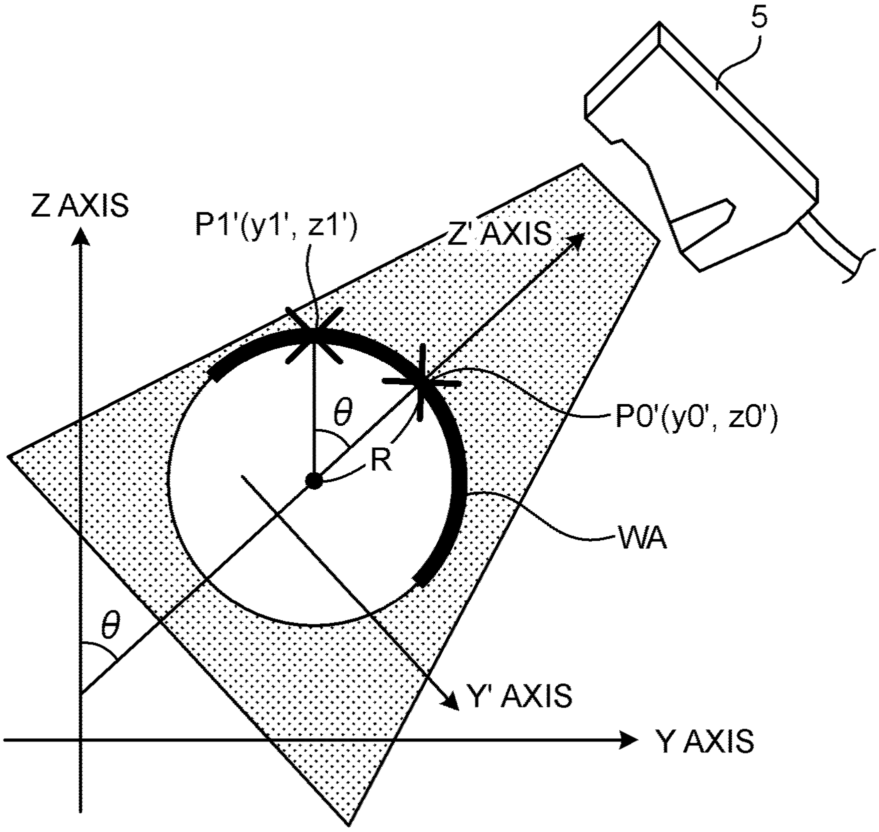

## INTERNATIONAL SEARCH REPORT

International application No.
**PCT/JP2024/017959**

**A. CLASSIFICATION OF SUBJECT MATTER**

***B05C 9/10***(2006.01)i; ***B05C 13/02***(2006.01)i; ***G01B 11/24***(2006.01)i
FI: B05C9/10; B05C13/02; G01B11/24 Z

According to International Patent Classification (IPC) or to both national classification and IPC

**B. FIELDS SEARCHED**

Minimum documentation searched (classification system followed by classification symbols)

B05C9/10; B05C13/02; G01B11/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/104651 A1 (CHUO HATSUJO KABUSHIKI KAISHA) 30 June 2016 (2016-06-30) paragraphs [0024]-[0066], fig. 1-15 | 1, 9-12 |
| Y | | 7-8 |
| A | | 2-6 |
| Y | JP 2017-180537 A (MICRO HATSUJO KK) 05 October 2017 (2017-10-05) paragraphs [0035]-[0050], fig. 6-9 | 7-8 |
| Y | JP 2007-308067 A (TOYOTA JIDOSHA KABUSHIKI KAISHA) 29 November 2007 (2007-11-29) paragraphs [0017]-[0021], fig. 4-5 | 7-8 |
| A | WO 2022/017785 A1 (WAFIOS AKTIENGESELLSCHAFT) 27 January 2022 (2022-01-27) entire text, all drawings | 1-12 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/017959**

| Patent document cited in search report | Publication date (day/month/year) | Patent family member(s) | Publication date (day/month/year) |
|---|---|---|---|
| WO 2016/104651 A1 | 30 June 2016 | (Family: none) | |
| JP 2017-180537 A | 05 October 2017 | (Family: none) | |
| JP 2007-308067 A | 29 November 2007 | (Family: none) | |
| WO 2022/017785 A1 | 27 January 2022 | EP 4182101 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010101693 A